## Europäisches Patentamt

## European Patent Office

## Office européen des brevets

(11) Veröffentlichungsnummer: **0 190 756**
**B1**

(12) # EUROPÄISCHE PATENTSCHRIFT

(45) Veröffentlichungstag der Patentschrift:
13.09.89

(51) Int. Cl.⁴: **C04B 18/12, C04B 28/02**

(21) Anmeldenummer: 86101527.9

(22) Anmeldetag: 06.02.86

(54) Hydraulisch abbindender Beton aus Nebengestein des Bergbaus (Bergematerial) und Verfahren zu dessen Herstellung.

(30) Priorität: 07.02.85 DE 3504078

(43) Veröffentlichungstag der Anmeldung:
13.08.86 Patentblatt 86/33

(45) Bekanntmachung des Hinweises auf die Patenterteilung:
13.09.89 Patentblatt 89/37

(84) Benannte Vertragsstaaten:
BE DE FR GB NL

(56) Entgegenhaltungen:
EP-A- 0 087 492
FR-A- 925 434
GB-A- 3 960
NL-A- 252 535

BAUMASCHINE + BAUTECHNIK BMI, Band 32, Nr. 10, Oktober 1985, Seiten 386-388, Wiesbaden, DE; M.F. ACKERMANN et al.: "Verwendung von Aufbereitungsabgängen des Steinkohlenbergbaus im Hoch-, Tief- und Strassenbau"

(73) Patentinhaber: Bergwerksverband GmbH, Franz-Fischer-Weg 61, D-4300 Essen 13(DE)

(72) Erfinder: Ackermann, Manfred, Dipl.-Ing., Heidestrasse 49, D-4630 Bochum 6(DE)
Erfinder: Leininger, Dieter, Dr.-Ing., Waldeck 15, D-4300 Essen 1(DE)
Erfinder: Schieder, Theo, Potthoffsbörde 22, D-4300 Essen 1(DE)

**Beschreibung**

Die Erfindung bezieht sich auf hydraulisch abbindenden Beton aus Nebengestein des Bergbaus (Bergematerial) nach dem Oberbegriff des Anspruches 1 und ein Verfahren zu dessen Herstellung.

Beton der eingangs genannten Art, bei dem das mineralische Zuschlagsmaterial aus Mineralstoffen mit naturgegebener Sieblinie besteht, wird im Bauwesen in großen Mengen verwendet. Bei derartigem Beton wird das plastische Material in vorgefertigte und/oder vorgegebene Formen (Schalung) gefüllt. Anschließend härtet es innerhalb oder außerhalb der Formen (nach deren Entfernung) aus. Gegenüber dem mit üblichen Zuschlägen hergestellten Beton hat aus Bergematerial hergestellter Beton den Vorteil, daß seine Herstellung billiger ist und darüber hinaus zur Entlastung der Bergewirtschaft der Gruben dient.

Aus der DE-OS 31 47 855 ist ein hydraulisch abbindender Betonkörper (Formstein für Bauwerke) bekannt, dem das mineralische Zuschlagmaterial aus zerkleinertem Grubengestein (Bergematerial) aus dem Bergbau, insbesondere dem Steinkohlenbergbau besteht. Zementgebundene Betonkörper dieser Art besitzen beispielsweise nach dem Abbinden an der Luft nach 28 Tagen eine maximale Druckfestigkeit von etwa 40 N/mm². Sie sind insbesondere für Mauerwerk und Außenanlagen geeignet.

Für hochbelastbare Betonkonstruktionen und Betonkörper, die z.B. als Betonpflaster, Schachtbausteine, Wasserbausteine und andere tiefbautechnische Fertigteile dienen sollen, werden jedoch Betonqualitäten benötigt, die nach den Anforderungen der DIN 18501 oder aus statischen Gründen eine Druckfestigkeit von etwa 60 N/mm² besitzen sollen.

Der Erfindung liegt die Aufgabe zugrunde, die Einsatzmöglichkeiten von Bergematerial auf die Herstellung von Beton mit maximalen Druckfestigkeiten zu erweitern.

Diese Aufgabe wird hinsichtlich von Beton der eingangs genannten Gattung durch die kennzeichnenden Merkmale des Patentanspruchs 1 und hinsichtlich eines Verfahrens zur Herstellung eines solchen Betons durch die kennzeichnenden Merkmale des Patentanspruchs 2 gelöst. Weiterbildungen der Erfindung ergeben sich aus den weiteren Unteransprüchen.

Die Begriffe Berge und Bergematerial werden hier gleichbedeutend verwendet während allgemein als Berge die Grubenberge und unbehandelte Abgänge aus Aufbereitungsanlagen und als Bergematerial die nachbehandelten Grubenberge und Aufbereitungsabgänge bezeichnet werden.

Der Bergebeton, gegebenenfalls auch armiert, ist für Beton bzw. Betonkörper verwendbar. Unter Betonkörpern werden hier vorgefertigte Bauteile aus Beton und unter Beton allgemein an Ort und Stelle hergestellte Betonbauwerke bzw. -bauwerksteile verstanden.

Der erfindungsgemäße Beton bzw. daraus hergestellte Betonkörper eignen sich infolge ihrer Festigkeit von etwa 60 N/mm² insbesondere für stark beanspruchten Beton in öffentlichen Außenanlagen, z. B. Straßenflächen, sowie für vorgefertigte Betonkörper, z. B. als Pflastersteine oder Kantensteine oder als Formsteine für beispielsweise den Schacht- oder Stollenausbau sowie auch als Wasserbausteine oder andere tiefbautechnische Betonfertigteile.

Betone der Zusammensetzung nach Anspruch 1 werden nach dem Verfahren gemäß Anspruch 2 als zementgebundene Betone hergestellt. Das Verdichten des fertigen Gemenges in Schalungen und Formen kann in bekannter Weise durch Rüttelverdichtung erfolgen, jedoch muß die Feuchte in Gegensatz zu den Herstellbedingungen von Beton aus natürlichen Quarzsanden bis zur Sättigungsgrenze der Bergemineralkörner eingestellt werden. Der Wassergehalt des fertigen Bergematerial/Natursand-Gemenges soll vorzugsweise zwischen 80 und 90 Gew.-⁰/oo liegen.

Der Natursandanteil soll zwischen 30 und 45 Gew.-% betragen. Auf diese Weise ist auch eine gutes Ablösen frischer Formlinge aus Schalungen und Matrizen gewährleistet. Außerdem wird bei einem solchen Natursandanteile eine Verbesserung der Rohdichte erzielt. Die Rohdichte der Formlinge soll mindestens 2,2 - 2,4 kg/dm³, vorzugsweise 2,35 kg/dm³, betragen.

Die hohen erzielbaren Betonfestigkeiten rühren offenbar daher, daß bereits durch die Auswahl der Grobberge > 56 mm ein Großteil der weichen Mineralbestandteile des Ausgangsmaterials ausgesondert wird. Die anschließende Schlagzerkleinerung, z.B. auf einer Prallmühle, wirkt selektiv, so daß sich die restlichen weichen Mineralbestandteile in der Kornfraktion 4 - 0 mm anreichern, während sich in den Fraktionen oberhalb der Korngrenze 4 mm im wesentlichen die härteren Bestandteile sammeln. Durch die Abtrennung der Kornfraktion 4 - 0 mm des Bergematerials werden somit die instabilen Bestandteile aus dem Zuschlagmaterial herausgehalten. Durch den Austausch der Fraktion bis 4 mm gegen Natursand gleicher Körnung wird, durch die Kornform (Rundkorn) des Quarzsandes begünstigt, nicht nur die Verdichtungswilligkeit der Mischung und das Entschalverhalten des Betons verbessert, sondern es erhöht sich auch sprunghaft die Druckfestigkeit des Betons bzw. der daraus hergestellten Betonkörper.

Weitere Ziele, Merkmale, Vorteile und Anwendungsmöglichkeiten der vorliegenden Erfindung ergeben sich aus der nachfolgenden Beschreibung von Ausführungsbeispielen anhand der beiliegenden Zeichnung. Hierbei zeigen

Fig. 1 die Körnungslinien der Bergematerialfraktionen 32-16 mm, 16 - 8 mm, 8 - 4 mm und 4 - 0 mm,
Fig. 2 die Körnungslinie der Natursandfraktion 4 - 0 mm,
Fig. 3 die Darstellung des Gesamtkornbandes des Zuschlagmaterials 8 - 0 mm,
Fig. 4 die Darstellung des Gesamtkornbandes des Zuschlagmaterials 16 - 0 mm,
Fig. 5 die Darstellung des Gesamtkornbandes des Zuschlagmaterials 32 - 0 mm.

Einer Aufbereitungsanlage des Ruhrgebietes wurde Bergematerial entnommen und bei 56 mm klassiert. Der Grobanteil über 56 mm wurde in einer Prallmühle auf eine obere Korngröße von 32 mm zerkleinert und in die folgenden vier Fraktionen zerlegt:

4 - 0 mm, 8 - 4 mm, 16 - 8 mm, 32 - 16 mm.

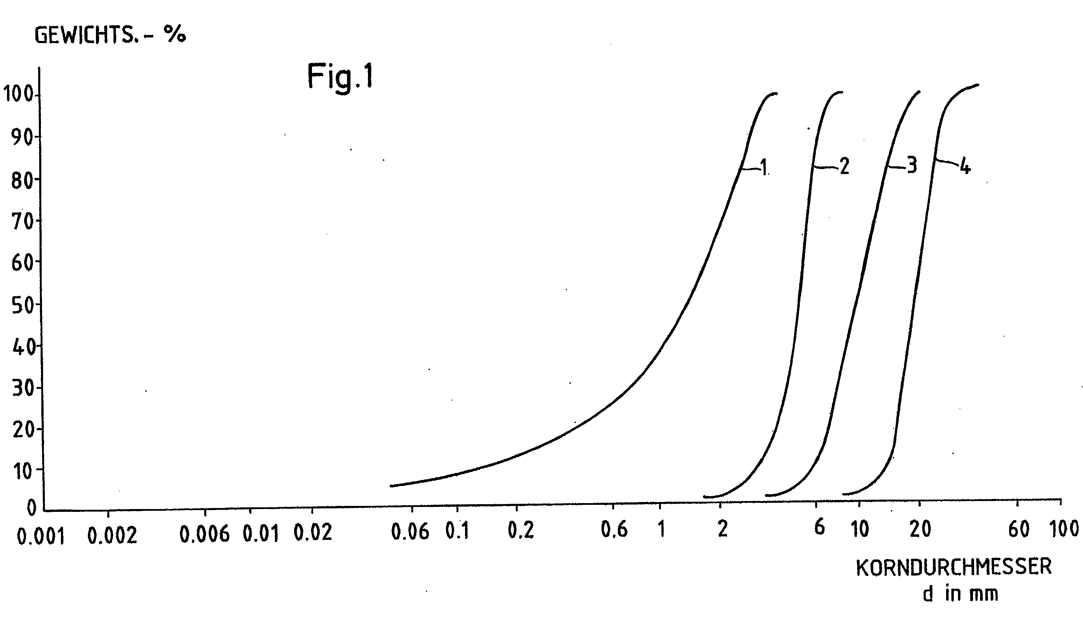

Das Mahlgut der vier Fraktionen hatte die in den Tabellen 1 bis 4 aufgeführten durchschnittlichen Siebanalysen (siehe auch Fig. 1).

Tabelle 1

I. Bergematerialfraktion der Körnung 4–0 mm

| Körnung (mm) | | | Gew.-% |
|---|---|---|---|
| | > | 2,0 | 34,5 |
| 1,0 | – | 2,0 | 29,0 |
| 0,63 | – | 1,0 | 11,1 |
| 0,25 | – | 0,63 | 12,0 |
| 0,063 | – | 0,25 | 7,6 |
| | < | 0,063 | 5,8 |
| | | | 100,0 |

Tabelle 2

II. Bergematerialfraktion der Körnung 8–4 mm

| Körnung (mm) | | | Gew.-% |
|---|---|---|---|
| | > | 8,0 | 0 |
| 8,0 | – | 6,3 | 21 |
| 6,3 | – | 4,0 | 59 |
| | < | 4,0 | 20 |

Tabelle 3

III. Bergematerialfraktion der Körnung 16–8 mm

| Körnung (mm) | | | Gew.-% |
|---|---|---|---|
| | > | 16,0 | 7 |
| 16,0 | – | 12,5 | 19 |
| 12,5 | – | 10,0 | 24 |
| 10,0 | – | 8,0 | 21 |
| | < | 8,0 | 29 |

Tabelle 4

IV. Bergematerialfraktion der Körnung 32–16 mm

| Körnung (mm) | | | Gew.-% |
|---|---|---|---|
| | > | 32,0 | 2 |
| 32,0 | – | 25,0 | 8 |
| 25,0 | – | 20,0 | 30 |
| 20,0 | – | 16,0 | 35 |
| | < | 16,0 | 25 |

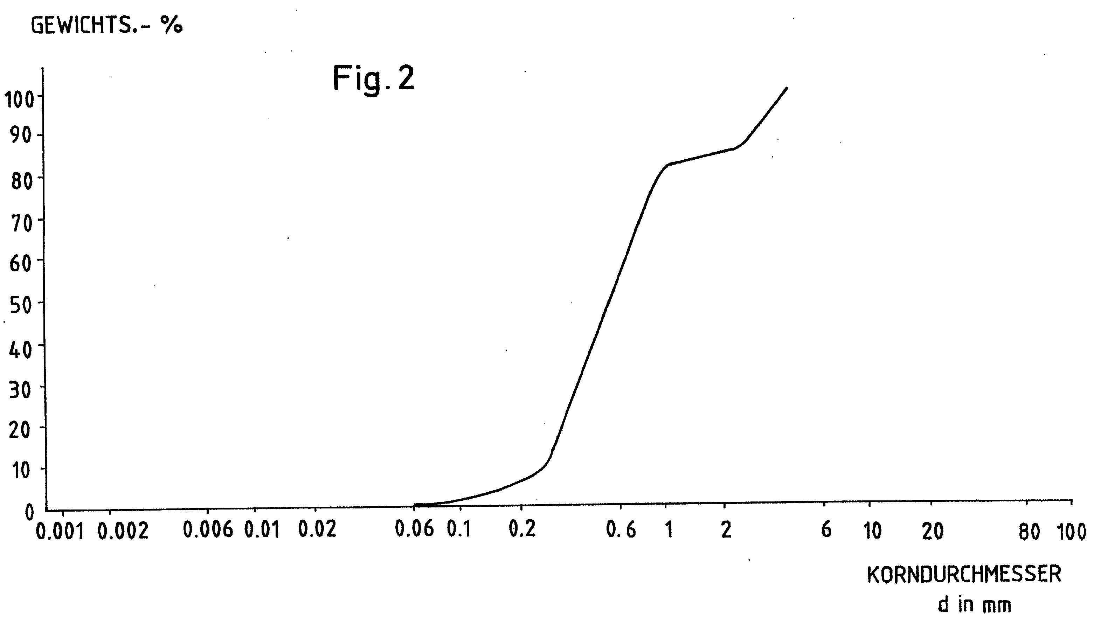

Von den aus dem Bergematerial gewonnenen Fraktionen wird die Feinstkornfraktion 4 - 0 mm verworfen und durch die entsprechende Natursandfraktion mit stetiger Sieblinie ersetzt, wie Tabelle 5 zeigt und in Fig. 2 aufgetragen ist.

**Tabelle 5**

| Natursandfraktion der Körnung 4–0 mm | |
|---|---|
| Körnung (mm) | Gew.-% |
| > 2,0 | 15,7 |
| 2,0 – 1,0 | 3,8 |
| 1,0 – 0,63 | 21,3 |
| 0,63 – 0,25 | 51,0 |
| 0,25 – 0,063 | 8,1 |
| < 0,063 | 0,1 |

Die Fraktionen 8 - 4 mm, 16 - 8 mm und 32 - 16 mm können unter Einschluß der Natursandfraktion 4 - 0 mm miteinander kombiniert und zu stetigen Körnungslinien zusammengestellt werden. Die Kornbänder 32 - 4 mm, 16 - 4 mm und 8 - 4 mm können je nach der herzustellenden Betonkörpergröße bzw. Betonbauwerksteilgröße auch unmittelbar durch entsprechende Schaltung der Zerkleinerungsaggregate als Zielkornband hergestellt werden.

Bei der Zusammenstellung geeigneter Gesamtkornbänder aus Natursand und Bergematerial sind die allgemeinen technischen Regeln der Betontechnologie zu beachten.

Zweckmäßig soll das Größtkorn des Bergematerials höchstens 1/4 der kleinsten Betonkörperdimension betragen.

Nachfolgend wird die Erfindung anhand eines Ausführungsbeispieles, bei dem aus dem erfindungsgemäßen Beton Betonkörper und zwar Betonpflastersteine hergestellt werden, näher beschrieben:

Auf der Grundlage der gemäß den Regeln der Betontechnologie festgelegten Sieblinien und Körnungsziffern k für Betonzuschlag wurde aus Bergematerial der Kornfraktion 8 - 4 mm und aus Natursand der Kornfraktion 4 - 0 mm in an sich bekanntem Rechengang das in Tabelle 6 aufgeführte Korngemisch 8 - 0 mm zusammengestellt.

Die entsprechenden Werte sind in Figur 1 für Bergematerial der Fraktion 8 - 4 mm (Kurve 2) und in Figur 2 für Quarzsand 4 - 0 mm zeichnerisch dargestellt.

Die Körnungsziffern k entsprechen dem Quotienten aus der Summe der Siebrückstände auf den Normsieben und der Zahl 100. Die Körnungsziffer einer Körnung beschreibt das Größtkorn einer stetigen Sieblinie und deren Kornzusammensetzung.

**Tabelle 6**

Durchgang in Gew.-% durch die Siebe

| Korngruppe in mm | 0,25 | 0,25 | 0,5 | 1 | 2 | 4 | 6,3 | 8 | Körnungsziffer k |
|---|---|---|---|---|---|---|---|---|---|
| Zement | 16 | 100 | 100 | 100 | 100 | 100 | 100 | 100 | |
| 0–4 $g_1$ | 0 | 8,2 | 59,2 | 80,5 | 84,3 | 100 | 100 | 100 | 1,67 |
| 4–8 $g_2$ | 0 | 0 | 0 | 0 | 1,2 | 20,5 | 92,3 | 100 | 4,86 |
| angestrebte Sieblinie | (16) | 5 | 18 | 30 | 45 | 68 | 90 | 100 | 3,44 |

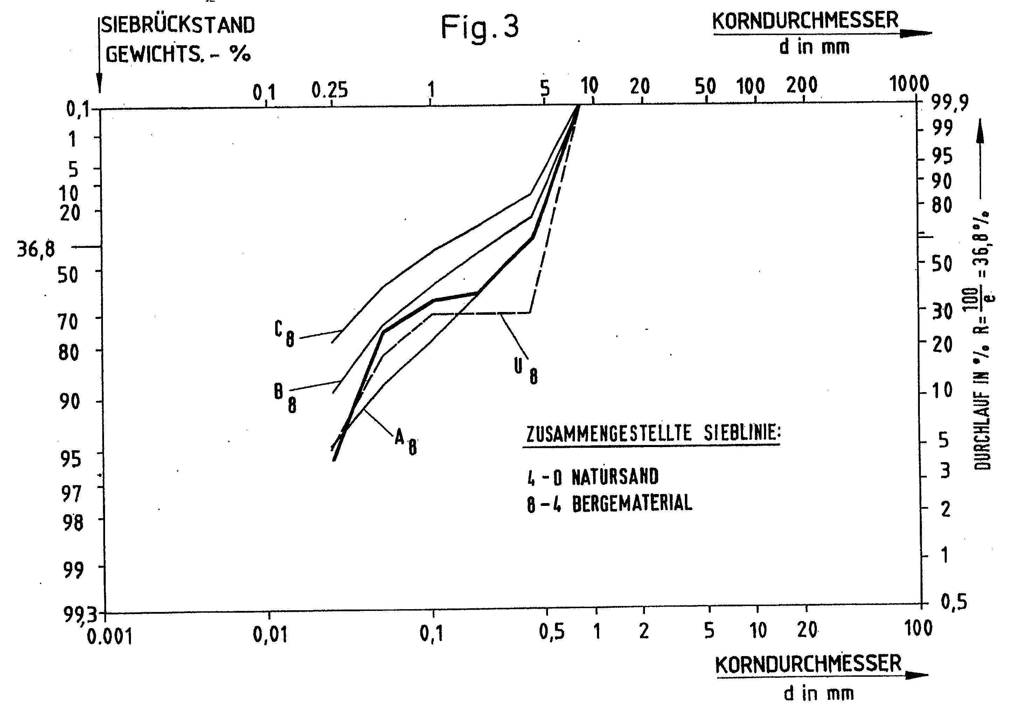

Für die Ermittlung der effektiven Körnungslinie wurde das Gesamtkornband der zusammengestellten Sieblinien in ein Rosin-Rammler-Benett-Diagramm eingetragen. Es ergaben sich die in Tabelle 7 aufgeführten Werte. Sie liegen innerhalb des Bereichs, der in Fig. 3 als mögliche Bandbreite für geeignete Sieblinien ausgewiesen ist.

**Tabelle 7**

| Korngruppe in mm | 0,25 | 0,25 | 0,5 | 1,0 | 2 | 4 | 6,3 | 8 |
|---|---|---|---|---|---|---|---|---|
| 45% 4–0 | 0 | 3,7 | 26,6 | 36,2 | 37,9 | 45 | 45 | 45 |
| 55% 8–4 | 0 | 0 | 0 | 0 | 0,66 | 11,3 | 50,8 | 55 |
| 100% 8–0 | 0 | 3,7 | 26,6 | 36,2 | 38,56 | 56,3 | 95,8 | 100 |
| Differenz zur «angestrebten Sieblinie» (Tabelle 6) | | –1,3 | +8,6 | +6,2 | –6,4 | –11,9 | +5,8 | 0 |

Aus den Zuschlägen mit der ermittelten Körnungslinie wurde die in Tabelle 8 ausgewiesene Mischung für die Betonkörper (Pflastersteine) zusammengestellt.

Wegen des erforderlichen Mehlkornanteils (0,25 - 0 mm), der 25 % betragen soll, wurde die benötigte Zementmenge (HOZ 45) zu 18 Gew.-% vorermittelt. Der angestrebte Wasser/Zementfaktor von 0,4 wurde nach der Feststellung der Eigenfeuchten der Zuschläge durch die entsprechende Wasserzugabe eingestellt.

Tabelle 8

| Stoffe | Zuschlag, trocken für 1t in kg | Eigenfeuchte | | Zuschlag, feucht für 1t in kg |
|---|---|---|---|---|
| | | in % | in kg | |
| Zement HZ 45 | 180 | — | — | 180 |
| Natursand 0–4 mm | 370 | — | — | 370 |
| Bergebrechsand 4–8 mm | 450–(450× 0,03)=440 | 3 | (450×0,03) | 450 |
| Gesamtwasser | 72 | | | |
| Zugabewasser | | | 13,53 | 72–13,5=58,5 |

Der Wasserfaktor beträgt demnach $\dfrac{72}{180} = 0,4$

Diese Mischung gemäß Tabelle 8 wurde auf einer Rüttelpresse verdichtet; im fertigen Zustand betrug die Höhe der Betonkörper 100 mm. Nach dem Verdichten erfolgte eine 24-stündige Feuchtraumlagerung und anschließend wurde an der Luft ausgehärtet.

Die Tabelle 9 zeigt die Prüfergebnisse von 10 Fertigungsserien nach 28 Tagen, wobei die Serien 1 - 5 auf Abmessungen und Druckfestigkeit, die Serien 6 - 10 dagegen auf Rohdichte (bei 105°C getrocknet) und auf Wasseraufnahme nach Gew.-% und Vol.-% untersucht wurden. Die Druckfestigkeiten der Betonkörper (Pflastersteine) entsprechen den Anforderungen der DIN 18501.

Mischungen und Ergebnisse des Begtriebsversuches (Eigenuntersuchung)

| Serie | Brechsand 8–4 Gew.-% | Natursand 4–0 Gew.-% | Eigenfeuch-te Gew.-% | Zement HZ 45 F kg/t | Wasserzu-gabe % | Steinge-wicht kg | $\rho$ E.P. kg/dm$^3$ | Rohdichte lufttrocken kg/dm$^3$ | Druckfestig-keit N/mm$^2$ | Rohdichte 105°C kg/dm$^3$ | Wasserauf-nahme % | Porenvolu-men % |
|---|---|---|---|---|---|---|---|---|---|---|---|---|
| 1 | 55 | 45 | 1,35 | 180 | 5,85 | 1,33 | siehe Rohdichte | 2,37 | 60,4 | 2,30 | 4,6 | 10,8 |
| 2 | 55 | 45 | 1,35 | 180 | 5,85 | 1,34 | | 2,38 | 60,8 | 2,31 | 4,7 | 10,7 |
| 3 | 55 | 45 | 1,35 | 180 | 5,85 | 1,33 | | 2,36 | 61,2 | 2,30 | 4,6 | 10,8 |
| 4 | 55 | 45 | 1,35 | 180 | 5,85 | 1,35 | | 2,38 | 62,2 | 2,32 | 4,5 | 10,6 |
| 5 | 55 | 45 | 1,35 | 180 | 5,85 | 1,35 | | 2,38 | 59,8 | 2,32 | 4,6 | 10,7 |
| 6 | 55 | 45 | 1,35 | 180 | 5,85 | 1,34 | | 2,38 | 59,9 | 2,31 | 4,7 | 10,7 |
| 7 | 55 | 45 | 1,35 | 180 | 5,85 | 1,35 | | 2,39 | 63,4 | 2,32 | 4,5 | 10,6 |
| 8 | 55 | 45 | 1,35 | 180 | 5,85 | 1,35 | | 2,39 | 64,8 | 2,32 | 4,5 | 10,6 |
| 9 | 55 | 45 | 1,35 | 180 | 5,85 | 1,34 | | 2,38 | 60,3 | 2,31 | 4,7 | 10,7 |
| 10 | 55 | 45 | 1,35 | 180 | 5,85 | 1,34 | | 2,39 | 62,1 | 2,31 | 4,7 | 10,8 |

Bezüglich der Widerstandsfähigkeit der Betonkörper gegenüber Frost und Tausalz sowie der Abriebwerte erfüllen sie bei der geringen ermittelten Wasseraufnahme (i. M. 4,6 Gew.-%) gut die Normanforderungen.

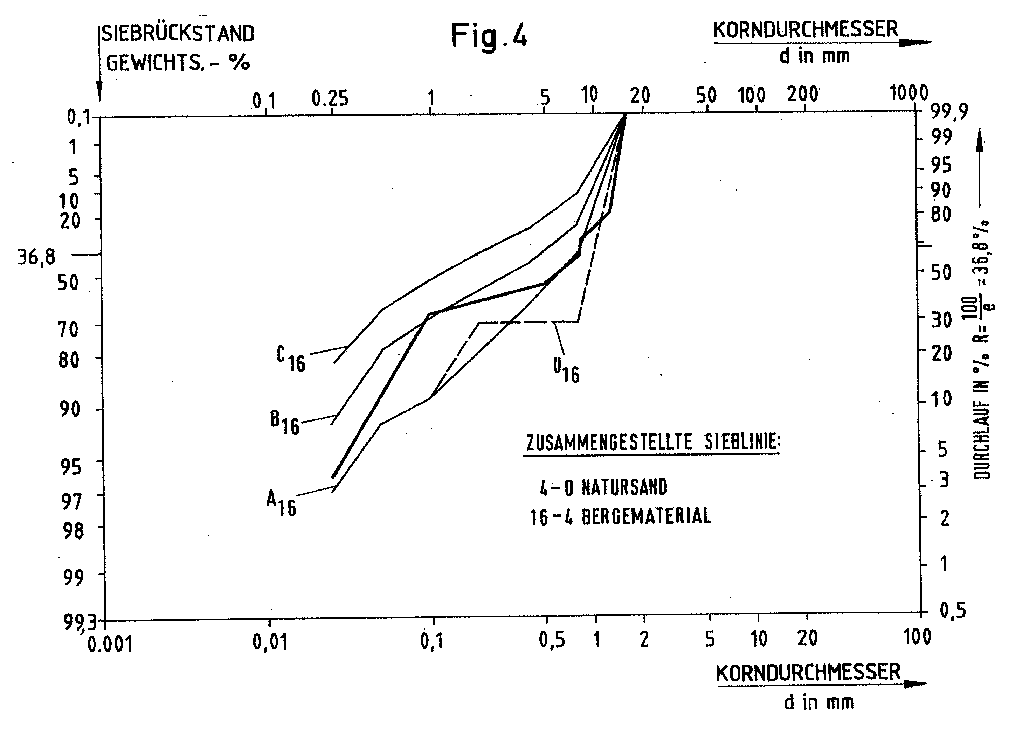

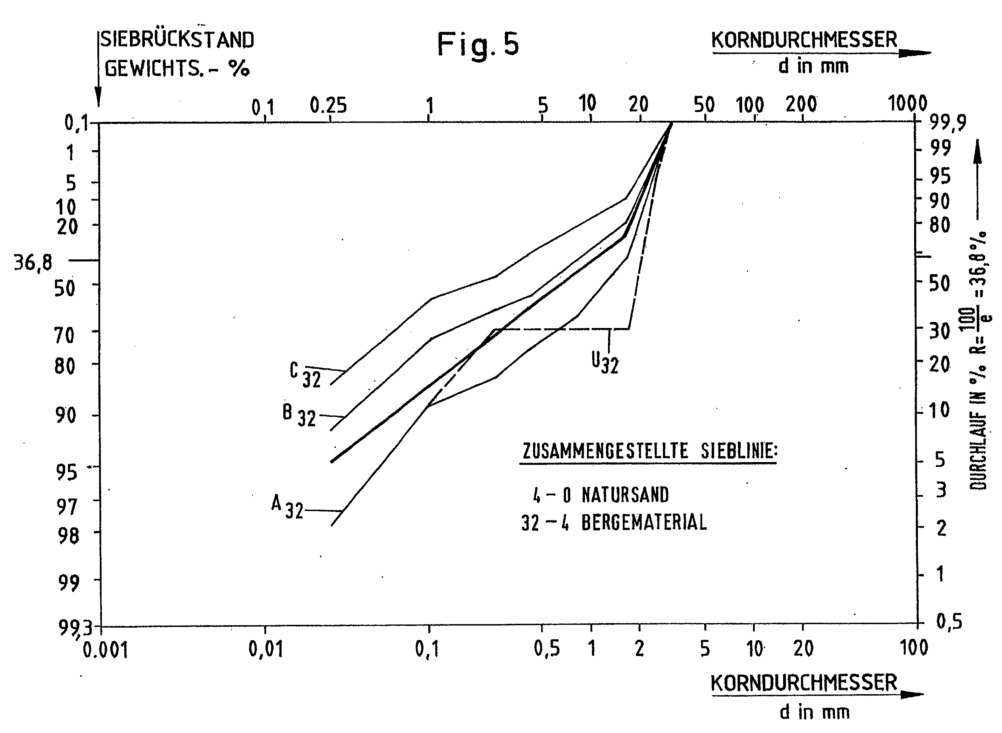

In den Fig. 4 und 5 sind Rosin-Rammler-Bennett-Diagramme dargestellt, aus denen hervorgeht, daß sich auch für die Korngruppen 4 - 16 mm und 4 - 32 mm geeignete Sieblinien für Betone bzw. Betonkörper aus Bergematerial ergeben.

Es ist überraschend, daß aus dem an sich als ungeeignet geltenden - weil heterogenen - Gesteinsgemisch des Bergematerials durch gezielte Vorauswahl und durch selektive Zerkleinerung sowie die Aussonderung der Fraktion < 4 mm und Ersatz durch Natursand ein Zuschlagstoff erzeugt werden kann, dessen mittlere Kornfestigkeit für die Herstellung eines Betons B 60 ausreicht.

Es überrascht außerdem, daß trotz der nicht idealen Kornform des Bergematerials, die erfahrungsgemäß nicht zu einer ausreichenden Verdichtung führt, durch den Austausch der Feinstkornbergefraktion < 4 mm gegen die entsprechende Natursandkörnung, in Kombination mit dem festgelegten Feinstkornanteil < 0,25 mm und der Wasserzugabe bis zur Sättigungsgrenze der Bergemineralkörner die Rohdichte des Betons ohne weitere Zusätze auf Werte über 2,33 kg/dm³ (bei 105 °C getrocknet) gesteigert werden konnte.

## Patentansprüche

1. Hydraulisch abbindender Beton, bestehend aus
a) 30 - 5 Gew.-% Zement der Festigkeitsklasse PZ 45 oder HOZ 45 als hydraulisch wirkendem Bindemittel,
b) 95 - 40 Gew.-% mineralischem Zuschlagmaterial aus Nebengestein des Bergbaus (Bergematerial) mit einer oberen Korngröße, die durch die herzustellende Betonkörpergröße vorgegeben ist,
c) bis zu 50 Gew.-% Natursand sowie
d) bis zu 10 Gew.-% sonstigen Beimengungen,
dadurch gekennzeichnet, daß
e) das Zuschlagmaterial > 4 mm aus gebrochenem Bergematerial besteht, während im Bereich von < 4 mm das Bergematerial durch Natursand ersetzt ist
f) der Mehlkornanteil einschließlich des Bindemittels 25 Gew.-% der Trockenmischung beträgt.

2. Verfahren zur Herstellung von Beton nach Anspruch 1, bei dem das Gemenge aus Bindemittel, körnigem Zuschlagmaterial und Wasser in Formen gefüllt, verdichtet und anschließend ausgehärtet wird, dadurch gekennzeichnet, daß eine Kornfraktion über 56 mm Korngröße aus dem Bergematerial abgetrennt und auf ein Kornband bis 32 mm zerkleinert wird, aus dem gewonnenen Bergematerial 32 - 0 mm eine Abtrennung der tonigen und kohlenstoffhaltigen Bestandteile durch Klassieren bei 4 mm vorgenommen wird, und die Fraktion 4 - 0 mm durch Natursand gleicher Körnung ersetzt wird, der zusammen mit der Bergematerialfraktion 32 - 4 mm als Zuschlagmaterial dient.

3. Verfahren zur Herstellung von Beton nach Anspruch 2, dadurch gekennzeichnet, daß eine Bergematerialfraktion 16 - 4 mm hergestellt und zusammen mit der Natursandfraktion 4 - 0 mm als Zuschlagmaterial dient.

4. Verfahren zur Herstellung von Beton nach Anspruch 2, dadurch gekennzeichnet, daß eine Bergematerialfraktion 8 - 4 mm hergestellt und zusammen mit der Natursandfraktion 4 - 0 mm als Zuschlagmaterial dient.

5. Verfahren nach Anspruch 2, 3 oder 4, dadurch gekennzeichnet, daß der Wassergehalt im Zement/Bergematerial/Natursandgemisch die Sättigungsgrenze erreicht und der Wasser-Zement-Faktor W/Z auf 0,4 eingestellt wird.

6. Verfahren nach Anspruch 2, 3 oder 4, dadurch gekennzeichnet, daß 30 - 45 Gew.-% Natursand als Zuschlagstoff verwendet wird.

7. Verfahren nach Anspruch 2, 3 oder 4, dadurch gekennzeichtnet, daß die Bergematerialfraktion und die Natursandfraktion derart sortiert werden, daß eine Betonrohdichte zwischen 2,2 und 2,5 kg/dm³, vorzugsweise 2,35 kg/dm³ erzielt wird.

8. Verfahren nach Anspruch 2,3 oder 4, dadurch gekennzeichnet, daß das Größtkorn des Bergematerials maximal 1/4 der kleinsten Betonkörperdimension beträgt.

## Claims

1. Hydraulically setting concrete, consisting of
a) 30–5% by weight of cement of the strength class PZ 45 or HOZ 45 as an hydraulically acting binder,
b) 95–40% by weight of additional mineral material from mining residues (mining material) with an upper particle size which is predetermined by the size of the concrete structure to be produced,
c) up to 50% by weight of natural sand, and
d) up to 10% by weight of other admixtures,
characterized in that
e) the additional material > 4 mm consists of broken mining material, while in the range of < 4 mm the mining material is replaced by natural sand,

f) the superfine-particle portion including the binder amounts to 25% by weight of the dry mixture.

2. A process for producing concrete according to Claim 1, in which the mixture of binder, additional particulate material and water is poured into moulds, compressed and then age-hardened, characterized in that a particle fraction of over 56 mm particle size is separated from the mining material and is comminuted to a particle range of up to 32 mm, the argillaceous and carbonaceous components are separated from the recovered 32–0 mm mining material by grading at 4 mm, and the 4–0 mm fraction is replaced by natural sand of the same particle size which together with the 32–4 mm mining material fraction is used as the additional material.

3. A process for producing concrete according to Claim 2, characterized in that a 16–4 mm mining material fraction is produced and together with the 4–0 mm natural sand fraction is used as the additional material.

4. A process for producing concrete according to Claim 2, characterized in that an 8–4 mm mining material fraction is produced and together with the 4–0 mm natural sand fraction is used as the additional material.

5. A process according to Claim 2, 3 or 4, characterized in that the water content in the mixture of cement, mining material and natural sand reaches the saturation limit and the water-cement factor W/C is set to 0.4.

6. A process according to Claim 2, 3 or 4, characterized in that 30–45% by weight of natural sand is used as the additional material.

7. A process according to Claim 2, 3 or 4, characterized in that the mining material fraction and the natural sand fraction are classified in such a way that a bulk density of concrete of between 2.2 and 2.5 kg/dm$^3$, preferably 2.35 kg/dm$^3$, is achieved.

8. A process according to Claim 2, 3 or 4, characterized in that the maximum particle size of the mining material amounts at most to 1/4 of the smallest dimension of the concrete structure.

## Revendications

1. Béton à prise hydraulique, consistant en
a) 30 à 5% en poids de ciment de la classe de résistance PZ 45 ou HOZ 45, comme agent liant à effet hydraulique;
b) 95 à 40% en poids de matière minérale additive constituée de déchets miniers (matière de remblai) avec une grandeur de grain supérieure qui est prescrite par la grandeur du corps de béton à fabriquer;
c) jusqu'à 50% en poids de sable naturel, ainsi que
d) jusqu'à 10% en poids d'autres additifs,
caractérisé en ce que
e) la matière additive consiste en matière de remblai brisée à plus de 4 mm, tandis que dans la région inférieure à 4 mm, la matière de remblai est remplacée par du sable naturel;
f) la proportion de grains en poudre, y compris le liant, s'élève à 25% en poids du mélange sec.

2. Procédé pour la fabrication de béton suivant la revendication 1, dans lequel le mélange d'agent liant de matière additive en grains et d'eau est introduit dans des moules, rendu compact et finalement durci, caractérisé en ce qu'une fraction de grain de grandeur de grain supérieure à 56 mm est séparée de la matière de remblai et est fractionnée sur une bande de grain allant jusqu'à 32 mm; en ce que, d'après la matière de remblai obtenue de 32–0 mm, on procède à une séparation des constituants argileux et contenant du carbone, par classement à 4 mm; et en ce que la fraction de 4–0 mm est remplacée par du sable naturel de même granulométrie, qui sert en même temps de matière additive avec la fraction de matière de remblai de 32–4 mm.

3. Procédé pour la fabrication de béton suivant la revendication 2, caractérisé en ce qu'on prépare une fraction de matière de remblai de 16–4 mm et en ce qu'elle sert de matière additive en même temps que la fraction de sable naturel de 4–0 mm.

4. Procédé pour la fabrication de béton suivant la revendication 2, caractérisé en ce qu'on prépare une fraction de matière de remblai de 8–4 mm et en ce qu'elle sert de matière additive en même temps que la fraction de sable naturel de 4–0 mm.

5. Procédé suivant la revendication 2, 3 ou 4, caractérisé en ce que la teneur en eau dans le mélange de ciment/matière de remblai/sable naturel atteint la limite de saturation et en ce que le facteur W/Z (eau/ciment) est réglé à 0,4.

6. Procédé suivant la revendication 2, 3 ou 4, caractérisé en ce que l'on emploie comme matière additive 30 à 45% en poids de sable naturel.

7. Procédé suivant la revendication 2, 3 ou 4, caractérisé en ce que la fraction de matière de remblai et la fraction de sable naturel sont triées de telle sorte que l'on obtienne une densité brute de béton comprise entre 2,2 et 2,5 kg/dm$^3$, de préférence 2,35 kg/dm$^3$.

8. Procédé suivant la revendication 2, 3 ou 4, caractérisé en ce que la grosseur de grain de la matière de remblai s'élève au maximum à 1/4 de la plus petite dimension du corps de béton.

GEWICHTS. - %

Fig.1

KORNDURCHMESSER
d in mm

EP 0 190 756 B1

GEWICHTS.- %

Fig. 2

KORNDURCHMESSER
d in mm

EP 0 190 756 B1

Fig.3

SIEBRÜCKSTAND
GEWICHTS. - %

KORNDURCHMESSER
d in mm

DURCHLAUF IN % $R = \frac{100}{e} = 36,8\%$

ZUSAMMENGESTELLTE SIEBLINIE:

4 - 0 NATURSAND
8 - 4 BERGEMATERIAL

KORNDURCHMESSER
d in mm

EP 0 190 756 B1

Fig.4

Fig. 5